# EUROPEAN PATENT APPLICATION

(11) **EP 4 332 891 A1**
(43) Date of publication of application: **06.03.2024**
(21) Application number: 22192765.0
(22) Date of filing: 30.08.2022
(51) Int. Cl.: G06T 7/10, G06T 5/00

(54) **ANATOMICAL SEGMENTATION OF TOMOGRAPHIC IMAGES CONTAINING ANATOMICAL ANOMALIES**

(71) Applicant: Koninklijke Philips N.V., 5656 AG Eindhoven (NL)
(72) Inventor: MEYER, Carsten, Eindhoven (NL); FLÄSCHNER, Nick, Eindhoven (NL); EWALD, Arne, 5656AG Eindhoven (NL); WENZEL, Fabian, 5656AG Eindhoven (NL)
(74) Representative: Philips Intellectual Property & Standards

(57) **Abstract**

Disclosed herein is a medical system (100, 300, 400, 500). The execution of machine executable instructions (120) causes a computational system (104) to: receive (200) an input tomographic medical image (126) depicting an anatomical anomaly (800), receive (202) a modified tomographic medical image (126) without the anatomical anomaly in response to inputting the input tomographic medical image into an image processing neural network (122), receive (204) an anatomical segmentation (130) of the modified tomographic medical image in response to inputting the modified tomographic medical image into an image segmentation module (128), wherein the anatomical segmentation divides the modified tomographic medical imaging into multiple anatomical regions, and provide (206) the anatomical segmentation as a segmentation of the input tomographic medical image.

## Description

### FIELD OF THE INVENTION

The invention relates to tomographic medical imaging technique, in particular to the segmentation of tomographic medical images.

### BACKGROUND OF THE INVENTION

Various tomographic medical imaging techniques such as Magnetic Resonance Imaging (MRI), Computed Tomography, Positron Emission Tomography, and Single Photon Emission Tomography enable detailed visualization of anatomical structure of a subject. After a tomographic medical image is acquired, it is typically segmented or divided into multiple anatomic regions.

International patent application publication WO2022057312A1 discloses a medical image processing method, apparatus and device, and a storage medium. Said method comprises: extracting masks of tissue abnormalities from a plurality of tissue abnormality images with labeling information; randomly selecting one or more masks, and generating a new tissue abnormality image on the selected one or more masks by using a Gaussian function; acquiring coordinate values of an abnormal tissue prediction region in a normal tissue sample image; and according to the coordinate values, superposing the new tissue abnormality image onto an image corresponding to the abnormal tissue prediction region, so as to obtain a simulated tissue abnormality image. It discloses the simulation of tissue abnormality images, and can control the form, size, gray scale distribution and generation position of lesions.

### SUMMARY OF THE IVENTION

The invention provides for a medical system, a computer program, and a method in the independent claims. Embodiments are given in the dependent claims.

A difficulty in segmenting tomographic medical images is that if there are any anatomical anomalies, such as tumors, present they may cause an image segmentation module to fail. Image segmentation modules may be implemented using different techniques and technologies such as a neural network, a shape deformable model, or an anatomical atlas registration. If there are anatomical anomalies present these image segmentation modules could output an anatomical segmentation that is incorrect. Embodiments may provide for an improved means of segmenting a tomographic medical image with an anatomical anomaly. First an input tomographic medical image with the anatomical anomaly present is input into an image processing neural network that has been trained to output a modified tomographic medical image that is similar to the input tomographic medical image, but the anatomical anomaly has been removed. The modified tomographic medical image is essentially a simulated tomographic medical image. The modified tomographic medical image is then segmented with the image segmentation module to provide an anatomical segmentation. The anatomical segmentation of the modified tomographic medical image is then provided as a segmentation of the input tomographic medical image.

In one aspect the invention provides for a medical system that comprises a memory that stores machine-executable instructions and also stores an image processing neural network. The image processing neural network is a neural network that receives an image and also outputs an image. The image processing neural network is configured for outputting a modified tomographic medical image descriptive of a chosen anatomical region of a subject in response to receiving an input tomographic medical image descriptive of the chosen anatomical region. The image processing neural network is further configured to output the modified tomographic medical image such that an anatomical anomaly depicted in the input tomographic medical image is removed. For an example, a tumor or other anatomical anomaly may be depicted in the input tomographic medical image. This is then removed by the image processing neural network and a new image is constructed that does not have the anatomical anomaly depicted in it.

The medical system further comprises a computational system. Execution of the machine-executable instructions causes the computational system to receive the input tomographic medical image. Execution of the machine-executable instructions further causes the computational system to receive the modified tomographic medical image in response to inputting the input tomographic medical image into the image processing neural network. Execution of the machine-executable instructions further causes the computational system to receive an anatomical segmentation of the modified tomographic medical image in response to inputting the modified tomographic medical image into an image segmentation module.

The anatomical segmentation divides the modified tomographic medical image into multiple anatomic regions. That is to say, the image segmentation module is configured to divide the modified tomographic medical image into multiple anatomical regions. Execution of the machine-executable instructions further causes the computational system to provide the anatomical segmentation as a segmentation of the input tomographic medical image. This may be beneficial because if there is an anatomical anomaly present then a conventional image segmentation module may fail. For example, if it is a shaped formal image segmentation module then the presence of an anatomical anomaly such as a tumor, a growth or abnormal anatomy may cause the segmentation module to fail and output an incorrect anatomical segmentation. Using the anatomical segmentation of the modified tomographic medical image may provide a better segmentation of the input tomographic medical image.

The image segmentation module could be implemented in a variety of ways. For example, it could be done using a neural network such as a U-net or a similar encoder-decoder network like a V-net neural network. The image segmentation module may be a deformable shape model. In other examples the image segmentation may be a registration to an anatomical atlas.

In different examples the tomographic medical image may for example be a Positron Emission Tomography (PET) image, a Single Photon Emission Computed Tomography (SPECT) , a Computed Tomography (CT) image, a Magnetic Resonance (MR) image, it may combine a positron emission tomography and magnetic resonance image, or a combined computed tomography and magnetic resonance image or other variants.

The image processing neural network may be constructed in different ways. For example, the image processing neural network could be a cycleGAN neural network or a variational autoencoder.

If the image processing neural network is a cycleGAN it could be trained using the standard cycleGAN method based on unpaired training images with and without anomaly / pathology. The arXive paper 1810.10850v2 of 8 April 2019, Sun, et. al. "An Adversarial learning approach to medical image synthesis for lesion detection" describes a suitable approach.

If the image processing neural network is a variational autoencoder, the training data comprises both anatomically normal as well as pathological images, which are both mapped to their latent space representation. In the latent space of the autoencoder a mean location for anatomically normal and with anatomical anomalies can be determined and a difference vector calculated. When a tomographic medical image has an anatomical anomaly its representation in latent space can be shifted by the difference vector to remove the anatomical anomaly.

In another embodiment execution of the machine-executable instructions further causes the computational system to provide an image mask that identifies a location of the anatomical anomaly in the input magnetic resonance image by comparing the input tomographic medical image and the modified tomographic medical image. For example, the images can be subtracted from one another. The difference between the input tomographic medical image and the modified tomographic medical image could then be thresholded and this may provide for a suitable image mask.

In another embodiment execution of the machine-executable instructions further causes the computational system to provide an image mask that identifies a location of the anatomical anomaly in the input tomographic medical image by receiving the image mask from the image processing neural network. The image processing neural network is further configured to output the image mask. During training, the location of the anatomical anomaly may be labeled in ground truth images. The labeling of the location of the anatomical anomaly in the ground truth images may provide a basis for training the image processing neural network to also output the image mask.

In another embodiment execution of the machine-executable instructions further causes the computational system to determine a geometric measure descriptive of the anatomical anomaly in each of the multiple anatomical regions using the image mask and the anatomical segmentation. The geometric measure may for example be a quantitative intrusion measure that is descriptive of a fractional volume of the anatomical anomaly in each of the multiple anatomical regions. In other examples, the geometric measure may be descriptive of a distance of intrusion of the anatomical anomaly into each of the multiple anatomic regions. In yet other examples, the geometric measure may be descriptive of a surface area of the anatomical anomaly in each of the multiple anatomical regions.

This embodiment may be beneficial because the image mask provides information about the size and location of the anatomical anomaly and the anatomical segmentation provides information about what the anatomical region would be like without the anatomical anomaly. This provides for a means of quantitatively measuring the effect of the anatomical anomaly on various anatomical regions of the subject. Such measurements would likely be impossible using conventional segmentation techniques.

In another embodiment execution of the machine-executable instructions further causes the computational system to render a composite image that superimposes the anatomical segmentation on the input tomographic medical image. This may be beneficial because it may provide for a means of visualizing anatomical regions that have been affected by the anatomical anomaly. It may also provide for a means of verifying or judging the effectiveness of the anatomical segmentation.

In another embodiment execution of the machine-executable instructions further causes the computational system to emphasize regions of the anatomical segmentation within the image mask and in the composite image. The regions within the image mask will likely be less reliable because these are regions which encompass the anatomical anomaly. This may be a means of calling attention to regions of the anatomical segmentation which may be less accurate or incorrect. They may also be provided as a warning to the user about the accuracy of the segmentation within the image mask or, for example, within the tumor. The emphasis of these regions may be considered to be a warning signal.

In another embodiment execution of the machine-executable instructions further causes the computational system to receive a second segmentation of the input tomographic medical image in response to inputting the input tomographic medical image into the segmentation module. Execution of the machine-executable instructions further causes the computational system to identify at least one warning zone of the anatomical segmentation by determining regions of the anatomical segmentation that differ from the second segmentation by more than a predetermined threshold. For example, if the distance between the anatomical segmentation and the second segmentation at a particular point vary by more than a threshold distance, then the warning zone may be provided. The identification of the at least one warning zone may then be provided as a warning signal. Execution of the machine-executable instructions further causes the computational system to mark the warning zone on the composite image. For example, this could cause the segmentation to have a different appearance or a different color.

In another embodiment the memory further stores an anatomical abnormality segmentation module configured for outputting an abnormality segmentation constrained to an image portion of the input tomographic medical image. Execution of the machine-executable instructions further causes the computational system to determine an input portion of the input tomographic medical image from the location of the anatomical anomaly as defined in the image mask. Execution of the machine-executable instructions further causes the computational system to receive the abnormality segmentation by applying the abnormality segmentation module to the input portion of the tomographic medical image. The abnormality segmentation module may be a segmentation module that is designed to specifically segment anatomical anomalies or specific types of anatomical anomalies. For example, the abnormality segmentation module may be designed to segment particular types of tumors or other pathologies.

In another embodiment, the anatomical abnormality segmentation module is any one of the following: a neural network such as a deep learning trained neural network, a threshold segmentation, an image segmentation based on fuzzy theory, a region-based image segmentation, and edge-based image segmentation.

In another embodiment execution of the machine-executable instructions further causes the computational system to modify the anatomical segmentation using the abnormality segmentation. For example, the abnormality segmentation could be spliced or joined with the anatomical segmentation. Or, for example, the regions of the anatomical segmentation outside of the abnormality segmentation could be normally used and then simply joined with the abnormality segmentation. This may provide for better definition of the anatomical regions as well as of defining the region of the anatomical abnormality more accurately.

In another embodiment execution of the machine-executable instructions further causes the computational system to receive configuration data configured to configure the anatomical abnormality segmentation module from a user interface. Execution of the machine-executable instructions further causes the computational system to modify operation of the anatomical abnormality segmentation module before applying the anatomical abnormality segmentation module to the input portion of the tomographic medical image. For example, the user interface may be used to define things like seed points, gray value intervals, the choice of the segmentation module type or mode. This may be beneficial because it may provide for a more accurate segmentation of the anatomical abnormality.

In another embodiment the image processing neural network is a cycleGAN neural network.

In another embodiment the image processing neural network is a variational autoencoder.

In another embodiment the medical system further comprises the tomographic medical imaging system. The memory further contains imaging system control commands configured for controlling the medical imaging system to acquire medical imaging data descriptive of the chosen anatomical region of the subject. Execution of the machine-executable instructions further causes the computational system to acquire the medical imaging data by controlling the tomographic medical imaging system with the imaging system control commands. Execution of the machine-executable instructions further causes the computational system to reconstruct the input tomographic medical image from the medical imaging data.

In another embodiment the memory further contains a radiotherapy planning module configured for outputting radiotherapy system control commands configured to control a radiotherapy system to irradiate one or more target zones in the chosen anatomical region in response to receiving a location of the one or more target zones, the anatomical segmentation and preferably a location of one or more protected regions within the chosen anatomical region in which to minimize irradiation. Execution of the machine-executable instructions further causes the computational system to output the radiotherapy system control commands in response to receiving the location of the one or more target zones, the anatomical segmentation, and preferably the location of the one or more protected regions. This embodiment may be beneficial because the use of the anatomical segmentation may provide for a more accurate and safe radiotherapy.

In some instances the location of the anatomical anomaly may be identical with the one or more target zones.

In another embodiment the medical system further comprises the radiotherapy system. Execution of the machine-executable instructions further causes the computational system to irradiate the one or more target zones by controlling the radiotherapy system with the radiotherapy control commands. This embodiment may be beneficial because it may provide for a more accurate irradiation of the one or more target zones as well as provide a higher degree of safety for the subject.

In another embodiment, the radiotherapy system is a LINAC system.

In another embodiment, the radiotherapy system is a gamma knife.

In another embodiment, the radiotherapy system is an X-ray radiotherapy system.

In another aspect the invention provides for a computer program that comprises machine-executable instructions and an image processing neural network. Both the machine-executable instructions and the image processing neural network may be executable by a computational system. The image processing neural network is configured for outputting a modified tomographic medical image descriptive of a chosen anatomical region of a subject in response to receiving an input tomographic medical image descriptive of the chosen anatomical region. The image processing neural network is further configured to output the modified tomographic medical image such that an anatomical anomaly depicted in the input tomographic medical image is removed. Execution of the machine-executable instructions causes a computational system to receive the input tomographic medical image.

Execution of the machine-executable instructions further causes the computational system to receive the modified tomographic medical image in response to inputting the input tomographic medical image into the image processing neural network. Execution of the machine-executable instructions further causes the computational system to receive an anatomical segmentation of the modified tomographic medical image in response to inputting the modified tomographic medical image into the image segmentation module. The anatomical segmentation divides the modified tomographic medical image into multiple anatomical regions. Execution of the machine-executable instructions further causes the computational system to provide the anatomical segmentation as a segmentation of the input tomographic medical image.

In another aspect the invention provides for a method of medical imaging. The method comprises receiving an input tomographic medical image. The input tomographic medical image is descriptive of a chosen anatomical region of the subject and picks an anatomical anomaly. The method further comprises receiving a modified tomographic medical image in response to inputting the input tomographic medical image into an image processing neural network. The image processing neural network is configured for outputting a modified tomographic medical image descriptive of a chosen anatomical region of the subject in response to receiving an input tomographic medical image descriptive of the chosen anatomical region. The image processing neural network is further configured to output the modified tomographic medical image such that the anatomical anomaly depicted in the input tomographic medical image is removed. The method further comprises receiving an anatomical segmentation of the modified tomographic medical image in response to inputting the modified tomographic medical image into an image segmentation module. The anatomical segmentation divides the modified tomographic medical image into multiple anatomical regions. The method further comprises providing the anatomical segmentation as a segmentation of the input tomographic medical image.

It is understood that one or more of the aforementioned embodiments of the invention may be combined as long as the combined embodiments are not mutually exclusive.

As will be appreciated by one skilled in the art, aspects of the present invention may be embodied as an apparatus, method or computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon.

Any combination of one or more computer readable medium(s) may be utilized. The computer readable medium may be a computer readable signal medium or a computer readable storage medium. A 'computer-readable storage medium' as used herein encompasses any tangible storage medium which may store instructions which are executable by a processor or computational system of a computing device. The computer-readable storage medium may be referred to as a computer-readable non-transitory storage medium. The computer-readable storage medium may also be referred to as a tangible computer readable medium. In some embodiments, a computer-readable storage medium may also be able to store data which is able to be accessed by the computational system of the computing device. Examples of computer-readable storage media include, but are not limited to: a floppy disk, a magnetic hard disk drive, a solid state hard disk, flash memory, a USB thumb drive, Random Access Memory (RAM), Read Only Memory (ROM), an optical disk, a magneto-optical disk, and the register file of the computational system. Examples of optical disks include Compact Disks (CD) and Digital Versatile Disks (DVD), for example CD-ROM, CD-RW, CD-R, DVD-ROM, DVD-RW, or DVD-R disks. The term computer readable-storage medium also refers to various types of recording media capable of being accessed by the computer device via a network or communication link. For example, data may be retrieved over a modem, over the internet, or over a local area network. Computer executable code embodied on a computer readable medium may be transmitted using any appropriate medium, including but not limited to wireless, wire line, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

'Computer memory' or 'memory' is an example of a computer-readable storage medium. Computer memory is any memory which is directly accessible to a computational system. 'Computer storage' or 'storage' is a further example of a computer-readable storage medium. Computer storage is any non-volatile computer-readable storage medium. In some embodiments computer storage may also be computer memory or vice versa.

A 'computational system' as used herein encompasses an electronic component which is able to execute a program or machine executable instruction or computer executable code. References to the computational system comprising the example of "a computational system" should be interpreted as possibly containing more than one computational system or processing core. The computational system may for instance be a multi-core processor. A computational system may also refer to a collection of computational systems within a single computer system or distributed amongst multiple computer systems. The term computational system should also be interpreted to possibly refer to a collection or network of computing devices each comprising a processor or computational systems. The machine executable code or instructions may be executed by multiple computational systems or processors that may be within the same computing device or which may even be distributed across multiple computing devices.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described with reference to flowchart illustrations and/or block diagrams of methods, apparatus (systems) and computer program products according to embodiments of the invention. It is understood that each block or a portion of the blocks of the flowchart, illustrations, and/or block diagrams, can be implemented by computer program instructions in form of computer executable code when applicable. It is further under stood that, when not mutually exclusive, combinations of blocks in different flowcharts, illustrations, and/or block diagrams may be combined. These computer program instructions may be provided to a computational system of a general-purpose computer, special purpose computer, or other programmable data processing apparatus to produce a machine, such that the instructions, which execute via the computational system of the computer or other programmable data processing apparatus, create means for implementing the functions/acts specified in the flowchart and/or block diagram block or blocks.

These machine executable instructions or computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The machine executable instructions or computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

A 'user interface' as used herein is an interface which allows a user or operator to interact with a computer or computer system. A 'user interface' may also be referred to as a 'human interface device.' A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, pedals, wired glove, remote control, and accelerometer are all examples of user interface components which enable the receiving of information or data from an operator.

A 'hardware interface' as used herein encompasses an interface which enables the computational system of a computer system to interact with and/or control an external computing device and/or apparatus. A hardware interface may allow a computational system to send control signals or instructions to an external computing device and/or apparatus. A hardware interface may also enable a computational system to exchange data with an external computing device and/or apparatus. Examples of a hardware interface include, but are not limited to: a universal serial bus, IEEE 1394 port, parallel port, IEEE 1284 port, serial port, RS-232 port, IEEE-488 port, Bluetooth connection, Wireless local area network connection, TCP/IP connection, Ethernet connection, control voltage interface, MIDI interface, analog input interface, and digital input interface.

A 'display' or 'display device' as used herein encompasses an output device or a user interface adapted for displaying images or data. A display may output visual, audio, and or tactile data. Examples of a display include, but are not limited to: a computer monitor, a television screen, a touch screen, tactile electronic display, Braille screen,0

Cathode ray tube (CRT), Storage tube, Bi-stable display, Electronic paper, Vector display, Flat panel display, Vacuum fluorescent display (VF), Light-emitting diode (LED) displays, Electroluminescent display (ELD), Plasma display panels (PDP), Liquid crystal display (LCD), Organic light-emitting diode displays (OLED), a projector, and Head-mounted display.

Medical imaging data is defined herein as being recorded measurements made by a tomographic medical imaging system descriptive of a subject. The medical imaging data may be reconstructed into a medical image. A tomographic medical image is defined herein as being the reconstructed two- or three-dimensional visualization of anatomic data contained within the medical imaging data. This visualization can be performed using a computer.

K-space data is defined herein as being the recorded measurements of radio frequency signals emitted by atomic spins using the antenna of a Magnetic resonance apparatus during a magnetic resonance imaging scan. Magnetic resonance data is an example of tomographic medical image data.

A Magnetic Resonance Imaging (MRI) image or MR image is defined herein as being the reconstructed two- or three-dimensional visualization of anatomic data contained within the magnetic resonance imaging data. This visualization can be performed using a computer. A magnetic resonance image is an example of a tomographic medical image.

### BRIEF DESCRIPTION OF THE DRAWINGS

In the following preferred embodiments of the invention will be described, by way of example only, and with reference to the drawings in which:
Fig. 1 illustrates an example of a medical system;
Fig. 2 shows a flow chart which illustrates a method of using the medical system of Fig. 1;
Fig. 3 illustrates a further example of a medical system;
Fig. 4 shows a flow chart which illustrates a method of using the medical system of Fig. 3;
Fig. 5 illustrates a further example of a medical system;
Fig. 6 illustrates a further example of a medical system;
Fig. 7 shows a flow chart which illustrates a method of using the medical system of Fig. 6;
Fig. 8 illustrates examples of an input tomographic medical image and a modified tomographic medical image; and
Fig. 9 illustrates an example of a model-based segmentation module.

### DETAILE DESCRIPTION OF EMBODIMENTS

Like numbered elements in these figures are either equivalent elements or perform the same function. Elements which have been discussed previously will not necessarily be discussed in later figures if the function is equivalent.

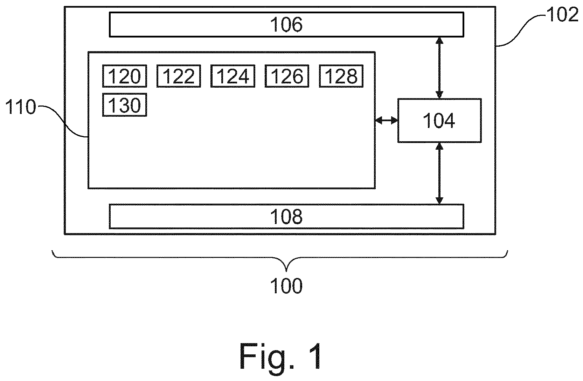

Fig. 1 illustrates an example of a medical system 100. The medical system 100 is shown as comprising a computer 102. The computer 102 may represent one or more computers at one or more locations. For example, the computer 102 may be a virtual machine that is available inside of a cloud-based system.

The computer 102 is shown as comprising a computational system 104. The computational system 104 may represent one or more computational systems or processing cores that are located at one or more locations. The computational system 104 is shown as being in communication with an optional hardware interface 106. If present, hardware interface 106 may be used for controlling other components such as a medical imaging system or even a magnetic resonance imaging system. The computational system 104 is shown as being in further communication with a user interface 108. If present, the user interface 108 may be used by an operator to control and interact with the medical system 100. The computational system 104 is further shown as being in communication with a memory 110. The memory 110 is intended to represent various types of memory that are accessible to the computational system 104. For example, the memory 110 may be a non-transitory storage medium. In other examples, the memory 110 may be normal computer RAM.

The memory 110 is shown as containing machine-executable instructions 120. The machine-executable instructions 120 enable the computational system 104 to perform various data manipulation, image manipulation, and computational tasks. In some examples the machine-executable instructions 120 may also enable the control of the medical imaging system via the hardware 106. The memory 110 is further shown as containing an image processing neural network 124. The memory 110 is further shown as containing an input tomographic medical image 124. The memory 110 is further shown as containing a modified tomographic medical image 126. The image processing neural network 122 is configured to receive the input tomographic medical image 124 and in response output the modified tomographic medical image 126. The input tomographic medical image 124 may have an anatomical anomaly and this may be removed so that it is no longer present in the modified tomographic medical image 126.

The memory 110 is further shown as containing an image segmentation module 128 that is used to segment the modified tomographic medical image 126. The memory 110 is further shown as containing anatomical segmentation 130 that is received from the image segmentation module 128 in response to inputting the modified tomographic medical image 126. The anatomical segmentation 130 may be used as a segmentation of the input tomographic medical image 124. This may have the advantage that the anatomical segmentation 130 is not affected by the presence of the anatomical anomaly. For example, this may enable the accurate division of the input tomographic medical image 124 into different anatomical regions although there may be an anatomical anomaly such as a tumor present.

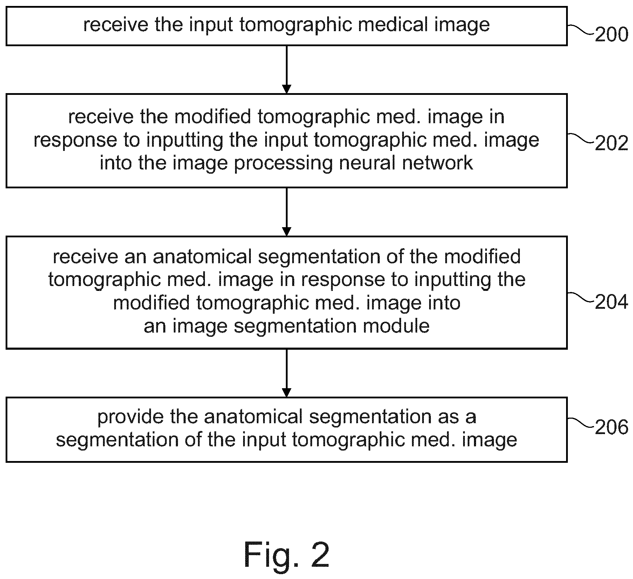

Fig. 2 shows a flowchart which illustrates a method of operating the medical system 100 of Fig. 1. First, in step 200, the input tomographic medical image 124 is received. This for example could be received by retrieving it from the memory 110, it could be received via a network connection, or it could be received by acquiring or reconstructing the input tomographic medical image 124. Next, in step 202, the modified tomographic medical image 126 is received in response to inputting the input tomographic medical image 124 into the image processing neural network. The image processing neural network is configured to output the modified tomographic medical image 126 such that an anatomical anomaly depicted in the input tomographic medical image 124 is removed. The method further comprises, in step 206, to provide the anatomical segmentation 130 as a segmentation of the input tomographic medical image 124. Providing the anatomical segmentation may take different forms in different examples. In one instance the anatomical segmentation may be overlaid on the input tomographic medical image 124. In other instances, it may be associated with the input tomographic medical image 124, for example the input tomographic medical image 124 may be stored in a so-called DICOM file. In this case the anatomical segmentation 130 could be appended to this DICOM file.

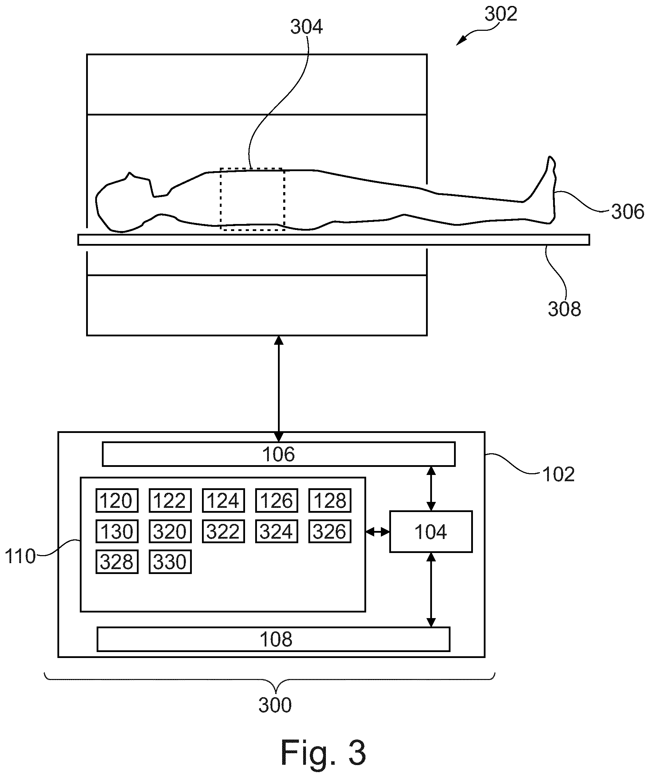

Fig. 3 illustrates a further example of a medical system 300. The system 300 is similar to the system 100 depicted in Fig. 1 except that it additionally comprises a tomographic medical imaging system 302. The tomographic medical imaging system 302 is intended to represent a variety of system types. For example, it may be a magnetic resonance imaging system, a positron emission tomography system, a computed tomography system, a single-photon emission tomography system or a combined modality such as a combined CT and MR system or combined CT and positron emission tomography system.

The tomographic medical imaging system 302 has a subject support 308 which supports a subject 306 within an imaging zone 304.

The memory 110 is further shown as containing imaging system control commands 320 which are used to control the operation and function of the tomographic medical imaging system 302. The memory 110 is further shown as containing medical imaging data 322 that has been collected and is descriptive of the imaging zone 304. The medical imaging data 322 was collected or measured by controlling the tomographic medical imaging system 302 with the imaging system control commands 320.

The memory 110 is further shown as containing an image mask 324 that has been determined either by comparing the input tomographic medical image 124 and the modified tomographic medical image 126. For example, one may be subtracted from the other and the difference may be thresholded. This may identify the location of the anatomical anomaly. In other examples, the image processing neural network 122 could be designed or trained to also output the image mask 324. The memory 110 is further shown as containing a geometric measure 326 that is descriptive of the anatomical anomaly in one or more of the multiple anatomical regions using the image mask 324 and the anatomical segmentation 130. For example, this may be a measure of the fractional volume of the anatomical anomaly within some of or all of the multiple anatomical regions for other things such as a distance of intrusion or the surface area.

The memory is further shown as containing a composite image 328 that is a combination of the anatomical segmentation 130 and the input tomographic medical image 124. The memory 110 is further shown as containing emphasized regions 330 which have been determined for the composite image 328. These may be regions of the anatomical segmentation 130 that are within the location of the image mask 324. They could for example be emphasized by changing their appearance, color or other optical property so that the operator is aware that the anatomical segmentation 130 is within the anatomical anomaly.

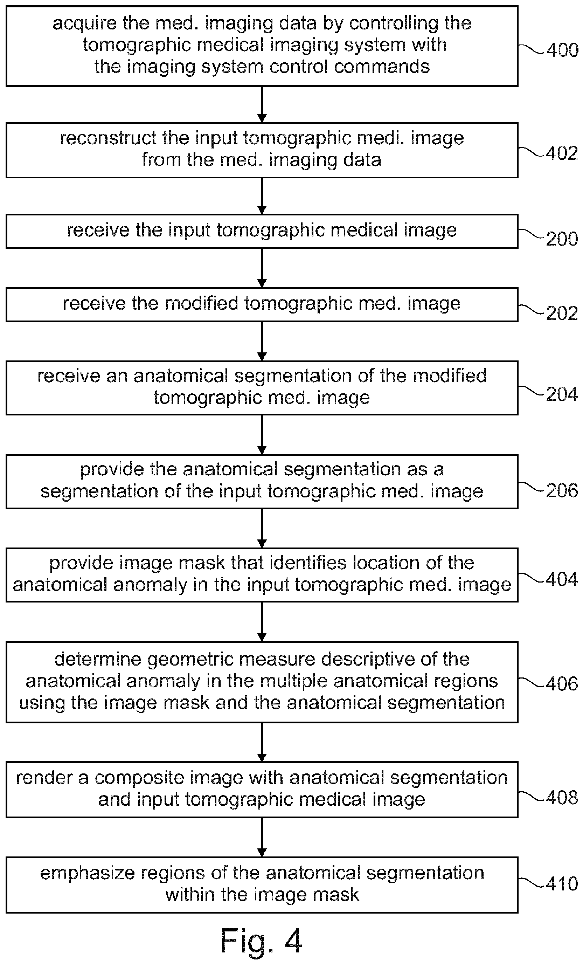

Fig. 4 shows a flowchart which illustrates a method of operating the medical system 300 of Fig. 3. First in step 400 the medical imaging data 322 is acquired by controlling the tomographic medical imaging system 302 with the imaging system control commands 320. Next, in step 402, the input tomographic medical image 124 is reconstructed from the medical imaging data 322. Next, the method repeats steps 200, 202, 204, and 206 as was illustrated in Fig. 2. After step 206 is performed the method proceeds to step 404. In step 404 the image mask 324 is provided. The image mask 324 provides a location of the anatomical anomaly in the input tomographic medical image 124. This for example may be done by subtracting the input tomographic medical image 124 and the modified tomographic medical image 126. Next, in step 406, a geometric measure 326 that is descriptive of the anatomical anomaly in at least one of the multiple anatomical regions is determined using the image mask 324 and the anatomical segmentation 130. Then, in step 408, the composite image 328 is rendered. The composite image 328 superimposes the anatomical segmentation 130 on the input tomographic medical image 124. Finally, in step 410, regions 330 of the anatomical segmentation 130 within the image mask 324 are emphasized in the composite image 328.

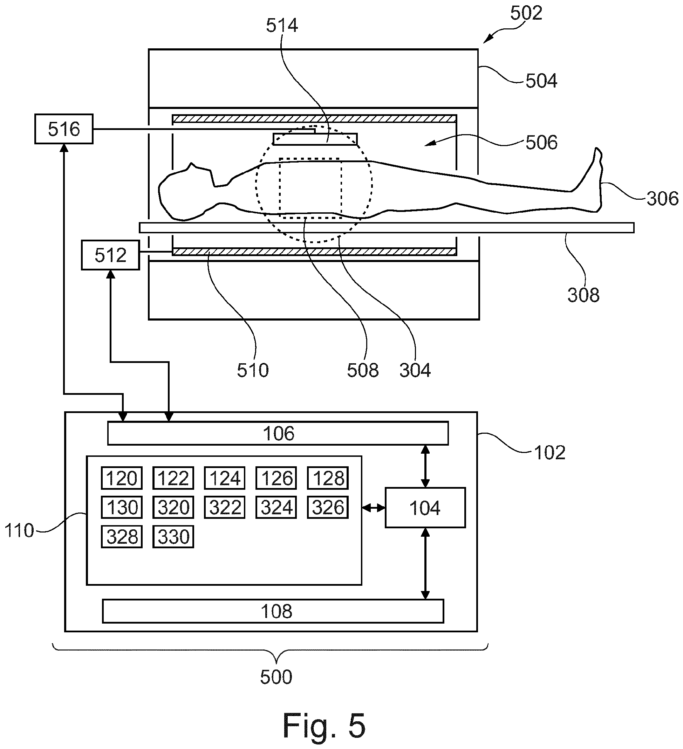

Fig. 5 illustrates a further example of a medical system 500. The medical system 500 is similar to that depicted in Fig. 3 except in this case the tomographic medical imaging system 302 is a magnetic resonance imaging system 502.

The magnetic resonance imaging system 502 comprises a magnet 504. The magnet 504 is a superconducting cylindrical type magnet with a bore 506 through it. The use of different types of magnets is also possible; for instance it is also possible to use both a split cylindrical magnet and a so called open magnet. A split cylindrical magnet is similar to a standard cylindrical magnet, except that the cryostat has been split into two sections to allow access to the iso-plane of the magnet, such magnets may for instance be used in conjunction with charged particle beam therapy. An open magnet has two magnet sections, one above the other with a space in-between that is large enough to receive a subject: the arrangement of the two sections area similar to that of a Helmholtz coil. Open magnets are popular, because the subject is less confined. Inside the cryostat of the cylindrical magnet there is a collection of superconducting coils.

Within the bore 506 of the cylindrical magnet 504 there is an imaging zone 304 where the magnetic field is strong and uniform enough to perform magnetic resonance imaging. A field of view 508 is shown within the imaging zone 304. The magnetic resonance data that is acquired typically acquired for the field of view 508. The subject 306 is shown as being supported by the subject support 308 such that at least a portion of the subject 306 is within the imaging zone 304 and the field of view 508.

Within the bore 506 of the magnet there is also a set of magnetic field gradient coils 510 which is used for acquisition of preliminary magnetic resonance data to spatially encode magnetic spins within the imaging zone 304 of the magnet 504. The magnetic field gradient coils 510 connected to a magnetic field gradient coil power supply 512. The magnetic field gradient coils 510 are intended to be representative. Typically, magnetic field gradient coils 510 contain three separate sets of coils for spatially encoding in three orthogonal spatial directions. A magnetic field gradient power supply supplies current to the magnetic field gradient coils. The current supplied to the magnetic field gradient coils 510 is controlled as a function of time and may be ramped or pulsed.

Adjacent to the imaging zone 304 is a radio-frequency coil 514 for manipulating the orientations of magnetic spins within the imaging zone 304 and for receiving radio transmissions from spins also within the imaging zone 304. The radio frequency antenna may contain multiple coil elements. The radio frequency antenna may also be referred to as a channel or antenna. The radio-frequency coil 514 is connected to a radio frequency transceiver 516. The radio-frequency coil 514 and radio frequency transceiver 516 may be replaced by separate transmit and receive coils and a separate transmitter and receiver. It is understood that the radio-frequency coil 514 and the radio frequency transceiver 516 are representative. The radio-frequency coil 514 is intended to also represent a dedicated transmit antenna and a dedicated receive antenna. Likewise, the transceiver 516 may also represent a separate transmitter and receivers. The radio-frequency coil 514 may also have multiple receive/transmit elements and the radio frequency transceiver 516 may have multiple receive/transmit channels. For example, if a parallel imaging technique such as SENSE is performed, the radio-frequency could 514 will have multiple coil elements.

The transceiver 516 and the gradient controller 512 are shown as being connected to the hardware interface 506 of the computer system 502.

In this example, the imaging system control commands 320 are pulse sequence commands 320'. Pulse sequence commands 320' are either commands or data which may be converted into commands which are used to control a magnetic resonance imaging system 502 to acquire k-space data. In this example, 110, the medical imaging data is k-space data 322'.

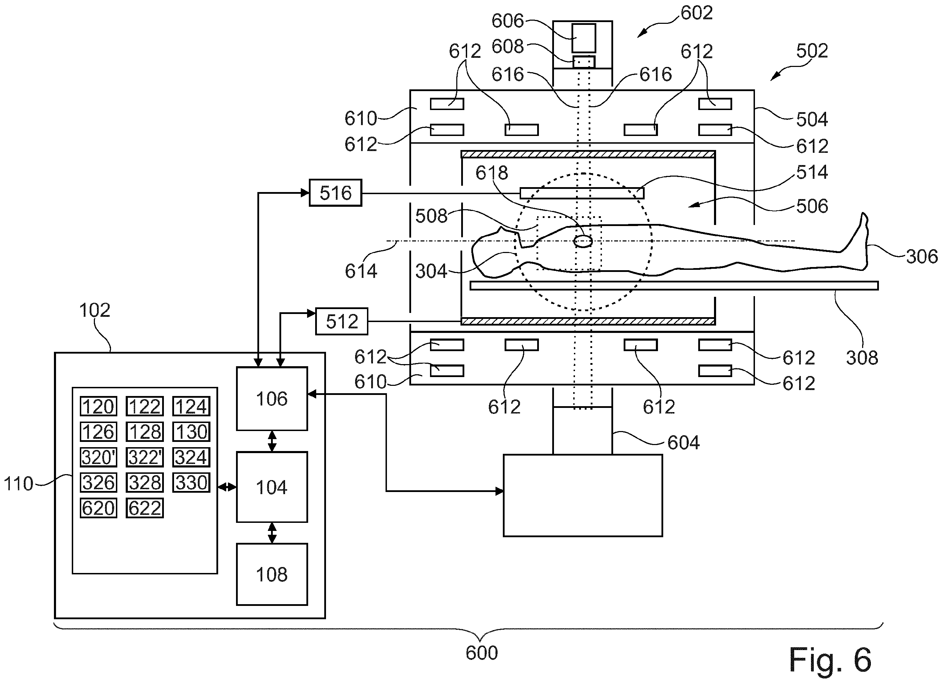

Fig. 6 illustrates a further example of a medical system 600 that is similar to the medical system 500 depicted in Fig. 5, except that it additionally comprises a radiation therapy system 602. In this example a magnetic resonance imaging system 502 is used to guide the radiation therapy system 602. This is intended to be exemplary. For example, the magnetic resonance imaging system 502 could be replaced with a computed tomography system.

The radiation therapy system 602 comprises a gantry 604 and a radiotherapy source 606. The gantry 604 is for rotating the radiotherapy source 606 about an axis of gantry rotation or rotational axis 614. Adjacent to the radiotherapy source 606 is a collimator 608.

The magnet 504 shown in this embodiment is a standard cylindrical superconducting magnet. The magnet 504 has a cryostat 610 with superconducting coils 612 within it. A split magnet may also be used instead.

Within the subject 306 there is a target zone 618. The axis of gantry rotation 614 is coaxial, in this example, with the cylindrical axis of the magnet 504. The radiation source 606 is aimed at the axis of rotation 614 such that the radiation source has a target volume about the axis of the rotation 614.

The subject support 308 has been positioned such that the target zone 618 lies on the axis 614 of gantry rotation. The radiation source 606 is shown as generating a radiation beam 616 which passes through the collimator 608 and through the target zone 618. As the radiation source 606 is rotated about the axis 614 the target zone 618 will always be targeted by the radiation beam 616. The radiation beam 616 passes through the cryostat 610 of the magnet 604. The magnetic field gradient coil may have a gap which separate the magnetic field gradient coil into two sections. If present, this gap reduces attenuation of the radiation beam 616 by the magnetic field gradient coil 510. In some embodiments the radio frequency coil 514 may also have gaps or be separated to reduce attenuation of the radiation beam 616.

The memory 110 is further shown as containing a radiation therapy planning module 620. The radiation therapy planning module 620 is configured for outputting radiotherapy system control commands configured to control the radiotherapy system 602 in response to receiving a location of the one or more target zones 618, the anatomical segmentation 130 and optionally, a location of one or more protected regions within the chosen anatomical region in which to minimize the irradiation. The memory is further shown as containing the radiation therapy system control commands 622 that were generated using the radiation therapy planning module 620.

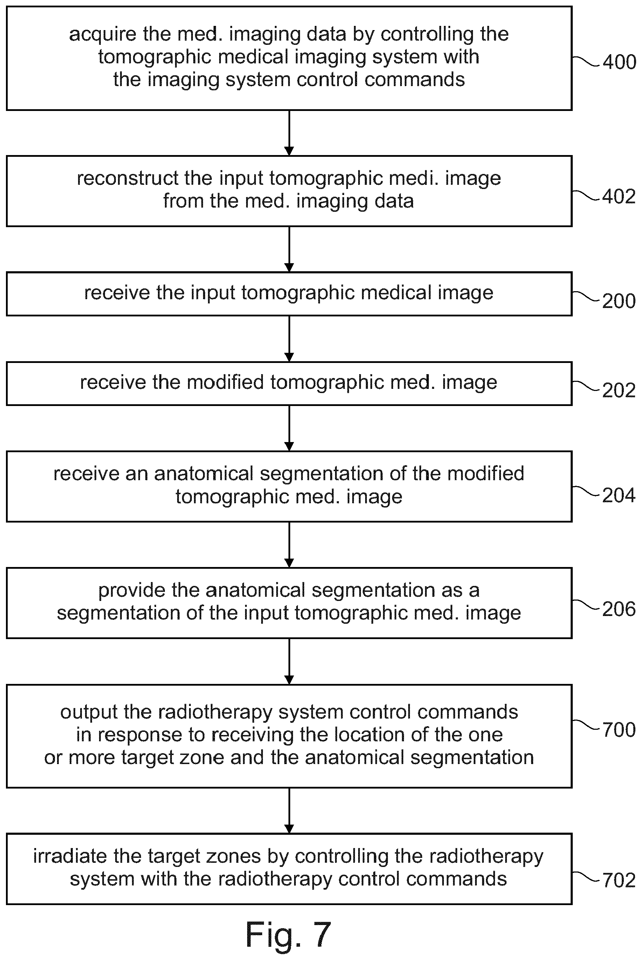

Fig. 7 illustrates a method of operating the medical system of Fig. 6. First, steps 400, 402, 200, 202, 204, and 206 are performed as was illustrated in Fig. 4. Next in step
700 output the radiotherapy system control commands in response to receiving the location of the one or more target zone, the anatomical segmentation and preferably the location of the one or more protected regions
702 irradiate the one or more target zones by controlling the radiotherapy system with the radiotherapy system control commands

The performance of anatomical image segmentation algorithms often suffers from the presence of abnormal contrast or anatomical anomalies, such as tumors, fractures, or other types of lesions, since they are usually trained on non-pathological contrast.

Examples may provide a system which is able to improve segmentation of pathological scans by utilizing artificial intelligence. Its main element is a component estimating a normal-looking correspondence of an abnormal image, on which anatomical segmentation algorithms are expected to work more reliably. This segmentation result is then mapped to the original, abnormal image, and visualized together with reliability information obtained from the mapping.

Many segmentation methods which learn geometrical properties and/or gray value characteristics from data - e.g. some model-based segmentations or other machine and deep learning based methods - are trained on and therefore optimized for healthy controls and may fail in case of abnormal contrast caused by lesions or pathologies. E.g., the segmentation of subcortical brain structures may fail in cases of brain tumors or heavy loads of white matter lesions. The reason is that such pathological contrast is extremely diverse regarding size, location and appearance such that it is hard to fully cover their expected variability in training. Still, since typical expected gray values may be significantly altered by such pathologies, they may considerably hamper correct segmentation.

Examples may address the above-mentioned problem by artificially "removing" any pathological contrast, abnormality or lesion in a test image to be segmented, using artificial intelligence. Thereby, the abnormal test image is transformed to an image with normal contrast, together with a mask indicating which image regions contain abnormalities and thus have been modified. The segmentation algorithm is then applied to the transformed image with normal contrast, where it is expected to produce an accurate and robust segmentation result. This result is then transferred to the original, abnormal image. All parts of the segmentation result which are in regions of the image mask, i.e., in regions which contain abnormalities, are marked (e.g., displayed in a more transparent way) to indicate that they are not reliable in presence of abnormalities. Furthermore, the segmentation result can also be applied to the original, abnormal test image; comparing the segmentations of the abnormal and the transformed normal-looking image, areas where both segmentations significantly differ (even outside of the image mask) can be marked as "non-reliable".

Examples may possibly contain one or more of the following features:
- A fully automatic statistical segmentation algorithm (an image segmentation module 128) (e.g., model-based segmentation, voxel-based segmentation etc.),
- An automatic algorithm (the image processing neural network 122) to automatically remove contrast of pathologies, abnormalities and lesions, e.g., based on artificial intelligence / generative adversarial networks, transforming an abnormal image into a normal-looking image without pathologic contrast, abnormalities and lesions together with a (binary) image mask indicating which image areas contained abnormalities and thus have been modified,
- A graphical display of the segmentation result, where the parts of the segmentations corresponding to image areas that are masked are visually modified to indicate that they are not reliable in the presence of abnormalities,
- a comparator comparing the segmentation result of the original abnormal image with the segmentation result of the transformed, healthy looking image, the result of which is fed to the graphical display of the segmentation result and further indicating areas of significant differences of both segmentation results, even outside of the mask,
- a user interface and further segmentation methods specifically tailored to segment abnormal tissue in marked volumes-of-interest, where the volumes-of-interest are set to the match the regions of the image mask and the user interface is used to manually select a suitable segmentation method and to manually set further boundary conditions (e.g. seed points, gray value intervals etc.).

By artificially removing abnormalities, pathological contrast and contrast of lesions using automatic algorithms from artificial intelligence, an abnormal image (input tomographic medical image 124) is transformed into an image (modified tomographic medical image 124) with normal appearing contrast.

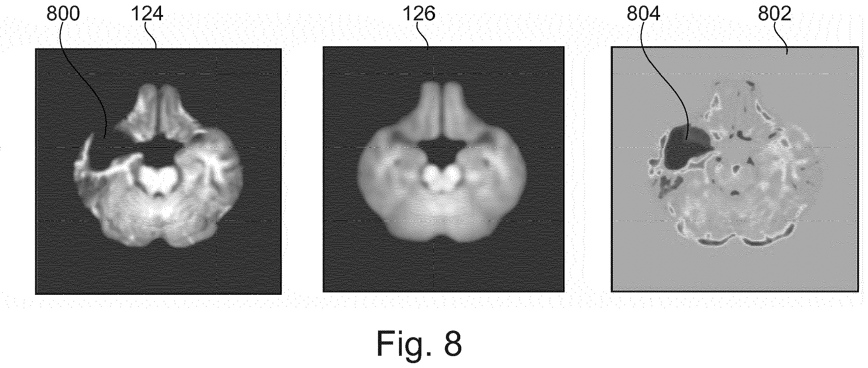

Fig. 8 shows several images. Image 124 is an example of an input tomographic medical image that is a magnetic resonance image and anatomical anomaly 700, which in this case is a tumor, is clearly present. Image 126 is an example of a modified tomographic medical image 126 that has been generated by inputting the input tomographic medical image 124 into an image processing neural network 122. The tumor 700 has been removed from the image. The image 702 is a difference image between images 124 and 126. There is a high contrast region 704 that indicates a location of the anatomical anomaly 700 or tumor in this case. The image mask 324 could be constructed by thresholding the image 702. This would identify the region labeled 704 in the mask.

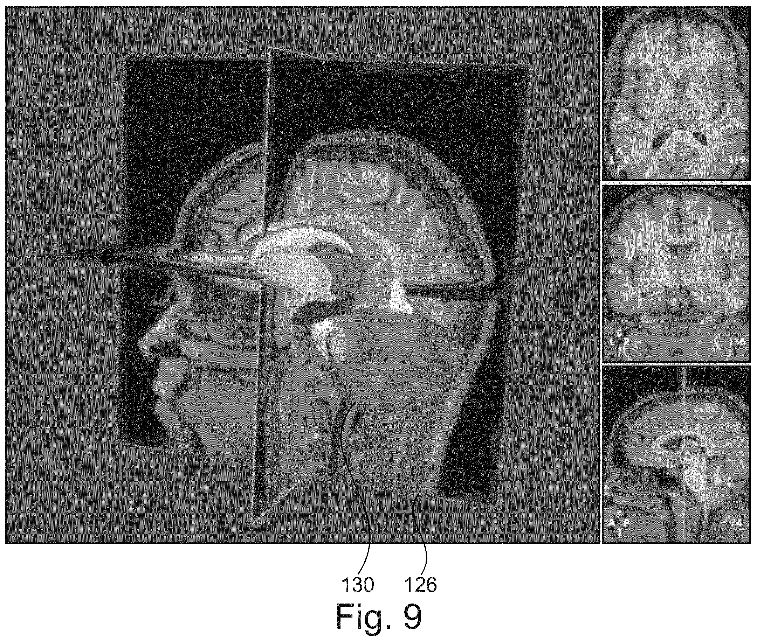

After the modified tomographic medical image 126 has been produced, a statistical segmentation algorithm (image segmentation module 128), e.g. model-based segmentation, is then applied to the transformed normal-looking image, see Fig. 9 below. Due to the absence of pathological contrast, abnormalities and lesions, the segmentation result is expected to be more accurate and more robust.

Fig. 9 illustrates several views of a modified tomographic medical image 126 where an anatomical segmentation 130 has been fit. It shows the model-based segmentation of sub-cortical structures and cortical tissue classes (gray matter, white matter, cerebrospinal fluid) in a (normal-looking) MR volume.

Next, the generated segmentation (anatomical segmentation 130) is transferred back to the original, abnormal image (input tomographic medical image 124). The generated image mask defines areas where the original and the transformed image differ; those parts of the segmentation result which lay in the image mask are displayed in a modified way (e.g. with larger transparency) to indicate that they are not reliable due to the presence of the abnormalities.

Optionally, the segmentation result (anatomical segmentation 130) can also be applied to the original, abnormal image (input tomographic medical image 126). Comparing the segmentations of the abnormal and the normal-looking image, all areas with significant deviations (even outside of the image mask) define unreliable segmentations and can be visually indicated (again using transparency or any other suitable visual indicator).

Furthermore, if dedicated segmentation algorithms for certain types of abnormalities are available (which could be simple region growing algorithms in spatially constrained areas for segmentation of lesions), a second segmentation step could be triggered by a corresponding user interface, involving manual selection of a suitable segmentation algorithm and manual definition of additional constraints, e.g. defining volumes-of-interest or seed points.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

### REFERENCE SIGNS LIST

- 100: medical system
- 102: computer
- 104: computational system
- 106: hardware interface
- 108: user interface
- 110: memory
- 120: machine executable instructions
- 122: image processing neural network
- 124: input tomographic medical image
- 126: modified tomographic medical image
- 128: image segmentation module
- 130: anatomical segmentation
- 200: receive the input tomographic medical image
- 202: receive the modified tomographic medical image in response to inputting the input tomographic medical image into the image processing neural network
- 204: receive an anatomical segmentation of the modified tomographic medical image in response to inputting the modified tomographic medical image into an image segmentation module
- 206: provide the anatomical segmentation as a segmentation of the input tomographic medical image
- 300: medical system
- 302: tomographic medical imaging system
- 304: imaging zone
- 306: subject
- 308: support
- 320: imaging system control commands
- 320': pulse sequence commands
- 322: medical imaging data
- 322': k-space data
- 324: image mask
- 326: geometric measure
- 328: composite image
- 330: emphasized regions
- 400: acquire the medical imaging data by controlling the tomographic medical imaging system with the imaging system control commands
- 402: reconstruct the input tomographic medical image from the medical imaging data
- 404: provide an image mask that identifies a location of the anatomical anomaly in the input tomographic medical image
- 406: determine a geometric measure descriptive of the anatomical anomaly in at least one of the multiple anatomical regions using the image mask and the anatomical segmentation
- 408: render a composite image that superimposes the anatomical segmentation on the input tomographic medical image
- 410: emphasize regions of the anatomical segmentation within the image mask in the composite image
- 500: medical system
- 502: magnetic resonance imaging system
- 504: magnet
- 506: bore of magnet
- 508: field of view
- 510: magnetic field gradient coils
- 512: magnetic field gradient coil power supply
- 514: radio-frequency coil
- 516: transceiver
- 600: medical system
- 602: radiation therapy system
- 604: gantry
- 606: radiotherapy source
- 608: collimator
- 610: cryostat
- 612: superconducting coil
- 614: rotational axis
- 616: radiation beam
- 618: target zone
- 620: radiation therapy planning module
- 622: radiation therapy system control commands
- 700: output the radiotherapy system control commands in response to receiving the location of the one or more target zone and the anatomical segmentation
- 702: irradiate the one or more target zones by controlling the radiotherapy system with the radiotherapy system control commands
- 800: anatomical anomaly
- 802: difference image
- 804: high contrast region to generate image mask

## Claims

1. A medical system (100, 300, 500, 600) comprising:
- a memory (110) storing machine executable instructions (120) and an image processing neural network (122), wherein the image processing neural network is configured for outputting a modified tomographic medical image (126) descriptive of a chosen anatomical region of a subject in response to receiving an input tomographic medical image (124) descriptive of the chosen anatomical region, wherein the image processing neural network is further configured to output the modified tomographic medical image such that an anatomical anomaly (800) depicted in the input tomographic medical image is removed;
- a computational system (104), wherein execution of the machine executable instructions causes the computational system to:
- receive (200) the input tomographic medical image;
- receive (202) the modified tomographic medical image in response to inputting the input tomographic medical image into the image processing neural network; and
- receive (204) an anatomical segmentation (130) of the modified tomographic medical image in response to inputting the modified tomographic medical image into an image segmentation module (128), wherein the anatomical segmentation divides the modified tomographic medical imaging into multiple anatomical regions; and
- provide (206) the anatomical segmentation as a segmentation of the input tomographic medical image.

2. The medical system of claim 1, wherein execution of the machine executable instructions further causes the computational system to provide (404) an image mask that identifies a location of the anatomical anomaly in the input tomographic medical image by any one of the following:
- comparing (802) the input tomographic medical image and the modified tomographic medical image; and
- receiving the image mask from the image processing neural network, wherein the image processing neural network is further configured to output the image mask.

3. The medical system of claim 2, wherein execution of the machine executable instructions further causes the computational system to determine (406) a geometric measure (326) descriptive of the anatomical anomaly in at least one of the multiple anatomical regions using the image mask and the anatomical segmentation.

4. The medical system of claim 2 or 3, wherein execution of the machine executable instructions further causes the computational system to render (408) a composite image (328) that superimposes the anatomical segmentation on the input tomographic medical image.

5. The medical system of claim 4, wherein execution of the machine executable instructions further causes the computational system to emphasize (410) regions (330) of the anatomical segmentation within the image mask in the composite image.

6. The medical system of claim 4 or 5, wherein execution of the machine executable instructions further causes the computational system to:
- receive a second segmentation of the input tomographic medical image in response to inputting the input tomographic medical image into the image segmentation module;
- identify at least one warning zone of the anatomical segmentation by determining regions of the anatomical segmentation that differ from the second segmentation by more than a predetermined threshold; and
- mark the warning zone on the composite image.

7. The medical system of any one of claims 2 through 6, wherein the memory further stores an anatomical abnormality segmentation module configured for outputting an abnormality segmentation constrained to an image portion of the input tomographic medical image, wherein execution of the machine executable instructions further causes the computational system to:
- determine the input portion of the input tomographic medical image from the location of the anatomical anomaly as defined in the image mask;
- receive the abnormality segmentation by applying the anatomical abnormality segmentation module to the input portion of the tomographic medical image.

8. The medical system of claim 7, wherein execution of the machine executable instructions further causes the computational system to modify the anatomical segmentation using the abnormality segmentation.

9. The medical system of claim 7 or 8, wherein execution of the machine executable instructions further causes the computational system to:
- receive configuration data configured for configuring the anatomical abnormality segmentation module from a user interface;
- modify operation of the anatomical abnormality segmentation module before applying the anatomical abnormality segmentation module to the input portion of the tomographic medical image.

10. The medical system of any one of the preceding claims, wherein the image processing neural network is any one of the following: a cycleGAN neural network, a variational autoencoder, and a U-Net.

11. The medical system of any one of the preceding claims, wherein the medical system further comprises a tomographic medical imaging system (302, 502), wherein the memory further contains imaging system control commands (320, 320') configured for controlling the tomographic medical imaging system to acquire medical imaging data (322, 322') descriptive of the chosen anatomical region of the subject, wherein execution of the machine executable instructions further causes the computational system to:
- acquire (400) the medical imaging data by controlling the tomographic medical imaging system with the imaging system control commands; and
- reconstruct (402) the input tomographic medical image from the medical imaging data.

12. The medical system of any one of the preceding claims, wherein the memory further contains a radiotherapy planning module (620) configured for outputting radiotherapy system control commands (622) configured to control a radiotherapy system (602) to irradiate one or more target zones (618) in the chosen anatomical region in response to receiving a location of the one or more target zones, the anatomical segmentation, and preferably a location of one or more protected regions within the chosen anatomical region in which to minimize irradiation; wherein execution of the machine executable instructions further causes the computational system to output (700) the radiotherapy system control commands in response to receiving the location of the one or more target zone, the anatomical segmentation and preferably the location of the one or more protected regions.

13. The medical system of claim 12, wherein the medical system further comprises the radiotherapy system, wherein execution of the machine executable instructions further causes the computational system to irradiate (702) the one or more target zones by controlling the radiotherapy system with the radiotherapy system control commands.

14. A computer program comprising machine executable instructions (120) and an image processing neural network (122), wherein the image processing neural network is configured for outputting a modified tomographic medical image (126) descriptive of a chosen anatomical region of a subject in response to receiving an input tomographic medical image (124) descriptive of the chosen anatomical region, wherein the image processing neural network is further configured to output the modified tomographic medical image such that an anatomical anomaly (800) depicted in the input tomographic medical image is removed, wherein execution of the machine executable instructions causes a computational system to:
- receive (200) the input tomographic medical image;
- receive (202) the modified tomographic medical image in response to inputting the input tomographic medical image into the image processing neural network;
- receive (204) an anatomical segmentation (130) of the modified tomographic medical image in response to inputting the modified tomographic medical image into an image segmentation module (128), wherein the anatomical segmentation divides the modified tomographic medical imaging into multiple anatomical regions; and
- provide (206) the anatomical segmentation as a segmentation of the input tomographic medical image.

15. A method of medical imaging wherein the method comprises:
- receiving (200) an input tomographic medical image (124);
- receiving (202) a modified tomographic medical image (126) in response to inputting the input tomographic medical image into an image processing neural network (122), wherein the image processing neural network is configured for outputting the modified tomographic medical image descriptive of a chosen anatomical region of a subject in response to receiving an input tomographic medical image descriptive of the chosen anatomical region, wherein the image processing neural network is further configured to output the modified tomographic medical image such that an anatomical anomaly (800) depicted in the input tomographic medical image is removed;
- receiving (204) an anatomical segmentation (130) of the modified tomographic medical image in response to inputting the modified tomographic medical image into an image segmentation module (128), wherein the anatomical segmentation divides the modified tomographic medical imaging into multiple anatomical regions; and
- providing (206) the anatomical segmentation as a segmentation of the input tomographic medical image.
